# EUROPEAN PATENT APPLICATION

(11) **EP 2 079 033 A1**
(43) Date of publication of application: **15.07.2009**
(21) Application number: 08100123.2
(22) Date of filing: 04.01.2008
(51) Int. Cl.: G06F 21/00

(54) **Method and system for secure peer-to-peer communication**

(71) Applicant: Irdeto Access B.V., 2132 HD Hoofddorp (NL)
(72) Inventor: Wajs, Andrew, Augustine, 2023 AA, Haarlem (NL)
(74) Representative: van Looijengoed, Ferry Antoin Theodorus

(57) **Abstract**

The invention provides a server system, client, method and program element for distributing content in a peer-to-peer network. The server system spits a file into segments and makes copies of the segments for clients to download. Each segment is encrypted with a unique encryption key and marked. Identifiers of encrypted segments are transmitted to clients such that each client receives a unique set of identifiers enabling the client to download a unique set of encrypted segments from other clients and/or from the server system.

## Description

### FIELD OF THE INVENTION

The present invention relates to a server system for distributing content, a client for receiving distributed content, a method for distributing content and a program element for distributing content. More specifically the invention relates to distributing files in a peer-to-peer network.

### BACKGROUND

Peer-to-peer networks function by having a number of computers communicating with each other over a network such as the internet. The peer-to-peer network is typically used to share files. Initially, the file that is offered for downloading is copied across multiple computers and split into sections. The computer that is downloading the file retrieves different sections from different computers. Thus, a computer downloading a file communicates with several computers simultaneously. Downloaded sections of the file by the computer are offered by this computer for download to other computers in the peer-two-peer network. The more computers have downloaded sections of a file, the more sources for downloading sections of the file are available. One or more central servers keep track of which sections of the file are available at which computers in the peer-to-peer network. From the server the computers receive information about the locations of segments of the file for downloading.

It has been proposed to apply peer-to-peer techniques to premium (i.e. paid for) content. With premium content, a file that is offered for downloading is typically protected using a DRM (digital rights management) system.

Applying DRM to peer-to-peer techniques has the drawback that because a single key or set of keys is used to protect the file, every copy of the file on every computer can be unlocked when the key or set of keys is available on a single computer. Especially in case of hacking, this means that a single attack resulting in the key or set of keys being revealed makes the file unlockable on all computers where the file is downloaded. Moreover, if someone distributes the key with his computer to enable other computers to unlock the file, it is not possible to trace the source computer of the key distribution and take appropriate action such as disabling further access to content, revoking other access to content or taking legal measures.

A method and system to uniquely associate multicast content with each of multiple recipients is disclosed in WO 01/67667. In WO 01/67667 content can be distributed and protected in a manner that is viable in terms of bandwidth economy and ensures that clients can be identified by the content received. Copies of encrypted content can be provided such that unique watermarks can be added to the copies. Content can also be both watermarked uniquely for multiple clients and multi-casted to the clients. As such, content can be distributed using the bandwidth efficiency of multicasting while providing reliable content protection and watermarking. WO 01/67667 does not disclose applications of peer-to-peer techniques.

### SUMMARY OF THE INVENTION

It is an object of the invention to provide an improved system and method for distributing content in a peer-to-peer network.

The object is achieved by the server system for distributing content, the client for receiving distributed content, the method for distributing content and the program element having the features as defined in the independent claims.

According to an aspect of the invention a server system is provided for distributing content. In a peer-to-peer network the content is typically distributed in the form of files. The server system is configured for connecting with at least a first client and a second client. The server system comprises a file splitter configured for splitting said file in at least a first segment and a second segment. The server system further comprises an encryptor configured for encrypting at least said first segment with a first encryption key or a second encryption key. The server system further comprises a receiver configured for receiving a content request from said first client and said second client. The server system further comprises a transmitter configured for transmitting said first segment encrypted with said first encryption key to said first client and said first segment encrypted with said second encryption key to said second client in response to said content request.

The server system may comprise one or more servers.

According to an aspect of the invention a method is provided for distributing content comprising at least one file. The method is for use in a server system configured for connecting with at least a first client and a second client. The method comprises the steps of splitting said file in at least a first segment and a second segment, encrypting at least said first segment with a first encryption key or a second encryption key, receiving a content request from said first client and said second client, and transmitting said first segment encrypted with said first encryption key to said first client and said first segment encrypted with said second encryption key to said second client in response to said content request

Thus the server system advantageously enables transmitting copies of the same segment of the file, but encrypted with different encryption keys, to the clients. Hereby it is prevented that when a decryption key is revealed in one client (e.g. through hacking) the segment can be decrypted with the revealed key in other clients.

According to an aspect of the invention a client device is provided for receiving distributed content. The client is configured for connecting with a server system and at least one further client. The distributed content comprises at least one file split in two or more segments. Each segment is encrypted with an encryption key. The client comprises a transmitter configured for transmitting a content request to said server system. The client further comprises a receiver configured for receiving from said server system a subset of identifiers. Each identifier uniquely identifies an encrypted segment and said subset of identifiers identifies said file. The receiver is further configured for receiving from said server system decryption keys for decrypting the encrypted segments. The client further comprises a download module configured for receiving one or more encrypted segments from the server system or from the at least one further client. This advantageously enables receiving encrypted segments from other clients in a peer-to-peer network or - if a segment is not available from another client - receiving that segment from the server. The client system further comprises an upload module configured for transmitting one or more encrypted segments received by the download module to one or more of the at least one further client. This advantageously enables redistribution of encrypted segments in the peer-to-peer network. The client further comprises a decryptor configured for decrypting the segments with said decryption keys. As the segments are encrypted with unique encryption keys, the decryption keys advantageously cannot be reused to decrypt segments of the file on another client having a different set of segments.

The embodiments of claims 2 and 17 advantageously enable the server system to control which encrypted first segment the third client is to receive.

The embodiments of claims 3 and 18 advantageously enable the server system to control which encrypted segments identifying the file the third client is to receive.

The embodiments of claims 4 and 19 advantageously enable that the file the third client is to receive has a unique set of encrypted segments.

The embodiments of claims 5 and 20 advantageously enable the server system to control distribution of decryption keys for decrypting the encrypted segments of the file in the third client. Advantageously the decryption keys transmitted to the third client can only be used for decrypting the encrypted segments identified by the subset of the identifiers transmitted to the third client.

The embodiments of claims 6 and 21 advantageously enable each encrypted segment to be identifiable. Moreover it enables tracking of which encrypted segment is transmitted to which client.

The embodiments of claims 7 and 22 advantageously enable each encrypted segment to be identifiable using a watermarking technique.

The embodiments of claims 8 and 23 advantageously enable advertisement data to be added to the encrypted segment and identification of the encrypted segment by the advertisement data comprised in the segment. Moreover the server system can control which identifiers of the segments are to be transmitted to the third client depending on the content of the advertisement profile, enabling targeted advertising.

The embodiments of claims 9, 14 and 24 advantageously enable distribution of premium content, whereby the client requires a subscription before downloading or decrypting the file. A subscription can be any kind of subscription, e.g. a pay-per-view subscription, a subscription allowing a number of downloads and/or decryptions, time limited subscriptions allowing downloads and/or decryptions during a predefined time period, and etcetera.

The embodiments of claims 10, 15 and 25 advantageously enable a two layer key hierarchy whereby the first layer is used for encryption and decryption of the content part of the segment and the second layer is used for encryption and decryption of the key part of the segment.

The embodiment of claim 12 advantageously enables each encrypted segment to be traceable using a watermarking technique.

The embodiment of claim 13 advantageously enables distribution of advertisement data in a peer-to-peer network and displaying the advertisement data on the client.

According to an aspect of the invention a program element is provided which, when being executed by a processor, is adapted to carry out a method for distributing content having one or more of the above mentioned features. This advantageously enables the server system to be implemented partly or as a whole in software.

The invention will be further illustrated with reference to the attached drawings, which schematically show preferred embodiments according to the invention. It will be understood that the invention is not in any way restricted to these specific and preferred embodiments.

### BRIEF DESCRIPTION OF THE DRAWINGS

The invention will be explained in greater detail by reference to exemplary embodiments shown in the drawings, in which:
Fig.1 shows a simplified architecture of a peer-to-peer network;
Fig.2 shows a simplified architecture of a peer-to-peer network for distributing content of an exemplary embodiment of the invention;
Fig.3 shows a server system for distributing content of an exemplary embodiment of the invention;
Fig.4 shows a server system for distributing content of an exemplary embodiment of the invention;
Fig.5 shows a client for distributing content of an exemplary embodiment of the invention;
Fig.6 shows a client for distributing content of an exemplary embodiment of the invention;
Fig.7 shows a schematic view of a method for distributing content of an exemplary embodiment of the invention; and
Fig.8 shows a schematic view of a method for distributing content of an exemplary embodiment of the invention.

### DETAILED DESCRIPTION

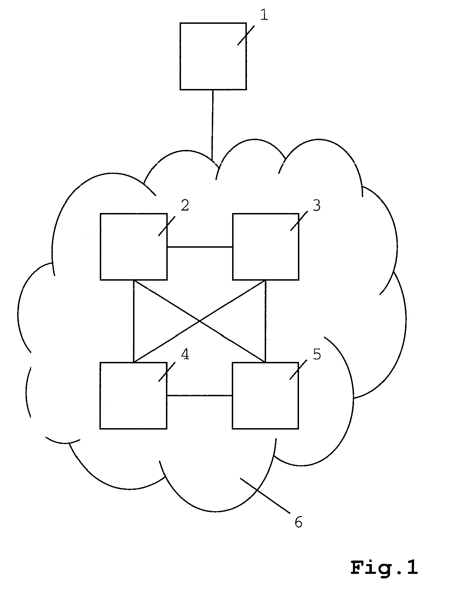

Content distributed in a peer-to-peer network usually takes the form of files, e.g. mp3 music files or mpeg movie files, which are shared amongst clients in the peer-to-peer network. A client is e.g. a PC, a PDA, a mobile phone, a smart phone, peer-to-peer software, a digital television set, a media player or a set top box. In a peer-to-peer file sharing system a file is split into segments. A client in a peer-to-peer network communicates with a number of other clients to download segments of the file. Another client can upload the complete file (i.e. all segments of the file) or part of the file (i.e. those segments of the file that have been downloaded in the other client) to the client. The peer-to-peer system arranges for the client to obtain segments from different other clients. This reduces the load on each client and spreads the network traffic. Fig.1 shows a simplified architecture of a peer-to-peer network 6 with one server system 1 connected to the network and four clients 2, 3, 4 and 5 in the network. It is possible that there are many more clients in the peer-to-peer network. It is possible that more than one server system is connected to the peer-to-peer network. Clients 2, 3, 4 and 5 communicate with each other through the peer-to-peer network 6. Server system 1 is connected to the peer-to-peer network for initially uploading segmented files to one or more of the clients 2, 3, 4 and 5, and to keep track of which segments are available at which clients.

The invention enables content to be distributed in the form of protected files which are cryptographically linked to a specific client. As a result, decryption keys received in a client can only be used to decrypt the file in that particular client and cannot be used to decrypt copies of the file distributed to other clients. It is possible to insert a fingerprint to segments of the distributed file in the form of a digital watermark. This makes the file, being in this example an unique set of watermarked and encrypted segments, traceable to the first client that uploaded the file to another client in the peer-to-peer network.

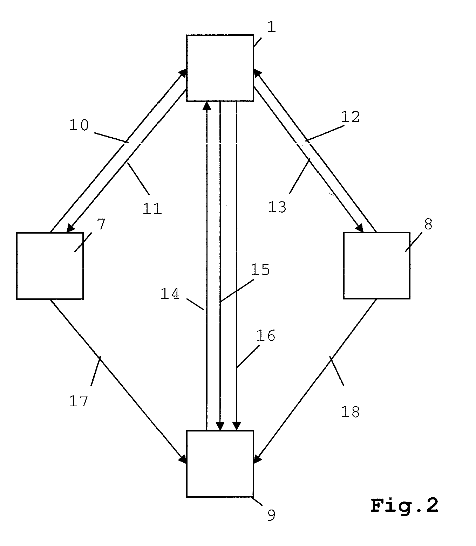

In Fig.2 a server system 1, a first client 7, a second client 8 and a third client 9 are shown in a simplified peer-to-peer network architecture. Distinction is made between the three clients to explain the invention. It will be understood that it is possible that clients 7, 8, and 9 are structurally and/or functionally identical, i.e. each of the clients 7, 8 and 9 can be any of the clients 2, 3, 4, or 5 as shown in Fig.1.

The server system 1 makes a file available to the peer-to-peer network through a download service, e.g. a webpage or web seed. Any client that cannot receive a segment that it needs from other clients can get that segment directly from the server system 1. The first few clients to download the file will get most or all of their segments from the server. Eventually, when the number of active clients is large enough, all segments will be available from at least one client, and clients will have no need to get segments directly from the server. If the number of clients drops to a small number, some clients will again have to get some segments from the server system 1.

Initially the file to be distributed is only available in server system 1, thus clients 7, 8 and 9 do not upload the file - or segments of the file - to the peer-to-peer network. When first client 7 selects a file for downloading, a content request, indicated by arrow 10, is transmitted to the server system 1. The content request contains an indication of the file and information about the first client 7. This information can include user information, account information, machine ID, software version, and/or other similar information.

Server system 1 spits the file in segments and encrypts each segment with an encryption key, preferably an unique encryption key. The encrypted segments are transmitted to the first client 7. This is indicated by arrow 11. It is possible that while downloading the file in first client 7, other clients have downloaded encrypted segments of the file as well. In this situation the first client 7 can download one or more segments from another client instead of the server system 1 to reduce the load on the server system 1 and to spread network load. Latter situation is not shown in Fig. 2.

Server system 1 makes available at least two copies of each segment of the file. As a result second client 8 requesting the same file also receives encrypted segments from the server system 1 and not from first client 7. The content request from second client 8 is indicated by arrow 12. The encrypted segments of the file are transmitted from the server system 1 to the second client 8 indicated by arrow 13. Decrypting the encrypted segments in the first client 7 and second client 8 results in identical files, but the encrypted copies of the file are different because the segments of the file are encrypted with different (preferably unique) encryption keys.

The encrypted segments received by the first client 7 and second client 8 have unique identifiers. The identifiers are stored in a memory of the server system 1 to keep track of to which clients the encrypted segments are transmitted. When third client 9 transmits a content request for downloading the file to the server system 1 - this is indicated by arrow 14 - the server system 1 can refer to the first client 7 and second client 8 to download encrypted segments of the file instead of offering encrypted segments itself. This reduces the load on the server and enables spreading of network load in the peer-to-peer network. Server system 1 selects identifiers from the memory and transmits the identifiers to third client 9, indicated by arrow 15. Preferably the identifiers are chosen such that the set of identifiers identifying the file, i.e. downloading the encrypted segments indicated by the identifiers results in a complete (encrypted) file, is a unique set of identifiers not provided to a client before. If it is not possible to select a unique set of identifiers, e.g. because there are not enough copies of an encrypted segment available at clients in the peer-to-peer network, one ore more encrypted segments are transmitted from the server system 1 to the third client 9 as explained for first client 7 and second client 8.

When the set of identifiers is received by third client 9, the third client 9 finds in the peer-to-peer network the clients that offer the encrypted segments as indicated by the set of identifiers. Hereto the third client 9 (again) provides the server system 1 with an indication of which file it wants to download, and it provides the server system 1 with information about how the third client 9 can be contacted by other clients. The server system 1 provides the third client 9 with a list of clients from which the third client 9 can get encrypted segments for the desired file. The third client 9 contacts the listed clients to find out which clients have which encrypted segments and possibly which versions of which segments. The clients coordinate with each other to download the segments they need from each other. In the example of Fig.2 some encrypted segments are downloaded from first client 7 as indicated by arrow 17 and some encrypted segments are downloaded from second client 8 indicated by arrow 18.

To be able to decrypt the unique combination of segments received in the third client 9, the server system 1 transmits the required decryption keys to third client 9. This is indicated by arrow 16 in Fig.2.

Each client is capable of redistributing segments of files to other clients in the peer-to-peer network. To prevent decrypted files from being redistributed, the clients are designed to upload encrypted segments only and decrypted segments are stored in a secured and tamper proof part of the client.

It is possible to mark the encrypted segments in the server system 1 prior to transmitting encrypted segments to clients. Hereto a digital watermark is added to an encrypted segment using any a known watermarking algorithm or by means of manipulation the content in another traceable manner. The mark, association data for associating the mark with the receiving client and the identifier of the segment are stored in a memory of the server system 1. This enables the encrypted segment to be identified at any time, even when the segment is altered or manipulated.

Alternatively the encrypted segments are marked with advertisement data. This enables the server system 1 to provide targeted advertising to a client. Hereto an advertisement profile stored in a memory of the server system 1 is read from the memory and the identifiers to be send to the third client 9 are chosen such that the desired advertisement data will be downloaded by the third client 9.

It is possible to require the third client 9 to have a subscription prior to downloading the encrypted segments or decryption keys in the third client 9. When sending e.g. a purchase request, the third client 9 informs the server system 1 of the file it wishes to purchase and the encrypted segments it has received. It is possible that the server system 1 is equipped with a DRM system that provides the unique set of keys to allow for the decryption of the unique set of encrypted segments at the third client 9.

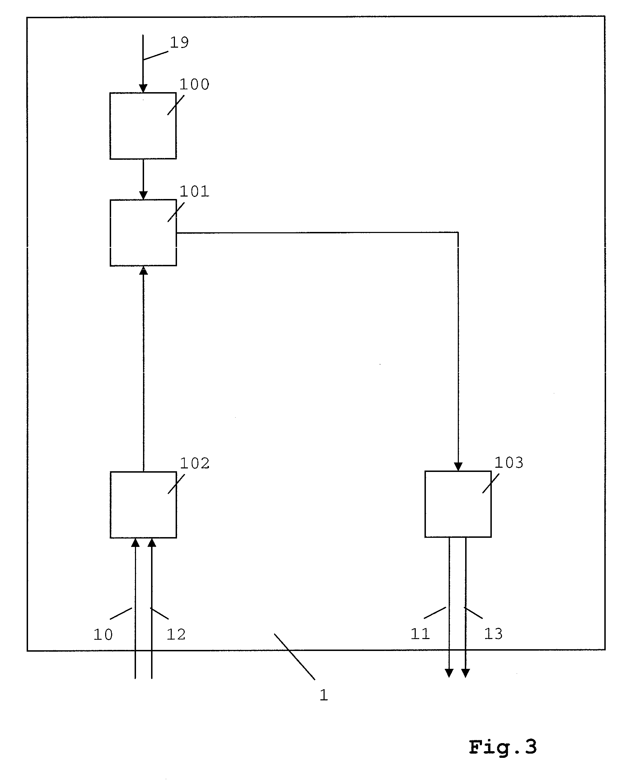

In Fig.3 a server system 1 of an exemplary embodiment of the invention is shown. In Fig.3 a file splitter 100 receives a file, indicated by arrow 19. After splitting the file into segments, each segment is encrypted in encryptor 101. Copies of the segments are encrypted with unique encryption keys. Receiver 102 receives content requests from clients. A content request from first client 7 is indicated by arrow 10 and a content request from second client 8 is indicated by arrow 12. A first copy of the segments encrypted with unique encryption keys is transmitted through transmitter 103 to the first client 7, as indicated by arrow 11. A second copy of the segments encrypted with unique encryption keys is transmitted through transmitter 103 to the second client 7, as indicated by arrow 12.

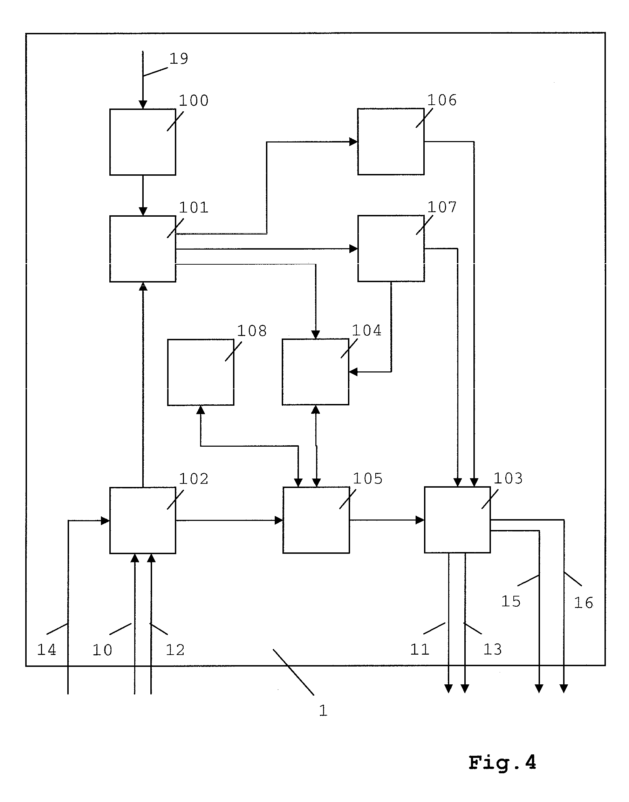

In Fig.4 a server system 1 is shown with additional functionality. In addition to the elements as shown in Fig.3, the server system 1 of Fig. 4 has a first memory 104 for storing identifiers of segments to keep track of which segments are provided to which clients. The first memory 104 is used by selector 105 to select a subset of the identifiers in response to a content request made by third client 9. This content request is indicated by arrow 14 and is received by receiver 102. The selected identifiers are transmitted to the third client 9 through transmitter 103, as indicated by arrow 15.

The server system 1 of Fig.4 has a key generator 106 for generating decryption keys for decrypting the encrypted segments the third client 9 is to receive. The decryption keys are transmitted to third client 9 through transmitter 103 indicated by arrow 16.

The server system 1 of Fig.4 has a marking module 107 for marking each encrypted segment. As explained with Fig.2 a mark can be a digital watermark or an advertisement data. In the latter case selector 105 is configured for reading an advertisement profile from a second memory 108 and select the subset of identifiers from the first memory 104 depending on the content of the advertisement profile.

It is possible that the server system 1 has a subscription module for exchanging subscription data with clients and for verifying if a client is allowed to decrypt received segments of the file.

It is possible that the segments transmitted to the first client 7 and second client 8 have a content part and a key part. The key part then contains a content key for decrypting the content part. In this case encryptor 101 is configured for encrypting the content part of the segment with an unique content key and for encrypting the key part of the segment with an enablement key. Key generator 106 generates decryption keys for decrypting the enablement key, which are transmitted to third client 9 instead of transmitting the decryption keys indicated by arrow 16.

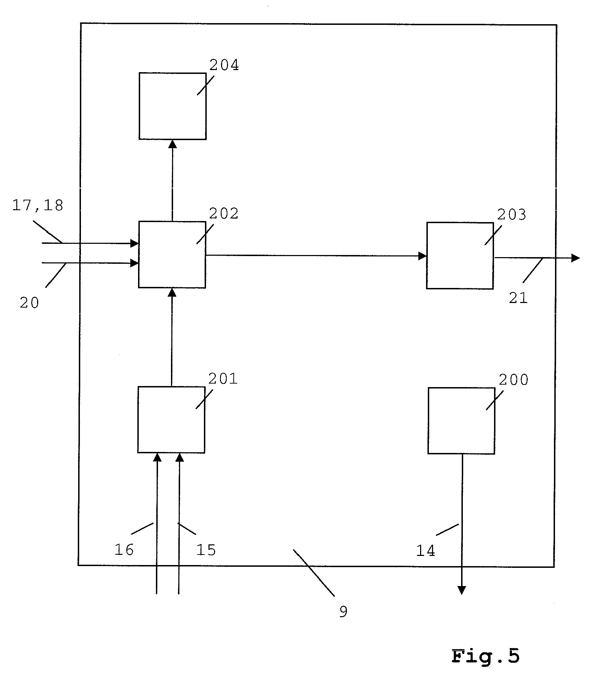

In Fig.5 a client of an exemplary embodiment of the invention is shown. In Fig.5 the client 9 transmits a content request to the server system 1 as indicated by arrow 14. In response a set of identifiers are received in receiver 201 as indicated by arrow 15. Download module 202 receives the encrypted segments as identified by the set of identifiers from first client 7 and/or second client 8 (indicated by arrow 17,18) and/or from the server system 1 (indicated by arrow 20). Decryption keys are received by receiver 201 as indicated by arrow 16, which decryption keys are used by decryptor 204 to decrypt de received segments. After decrypting, the file can be displayed on the client, e.g. through a media player. The client 9 has an upload module 203 for redistributing received encrypted segments to other clients in the peer-to-peer network as indicated by arrow 21. Preferably only encrypted segments can be redistributed and decrypted segments are stored in a secured and tamper resistance part of the client to prevent redistribution of decrypted segments.

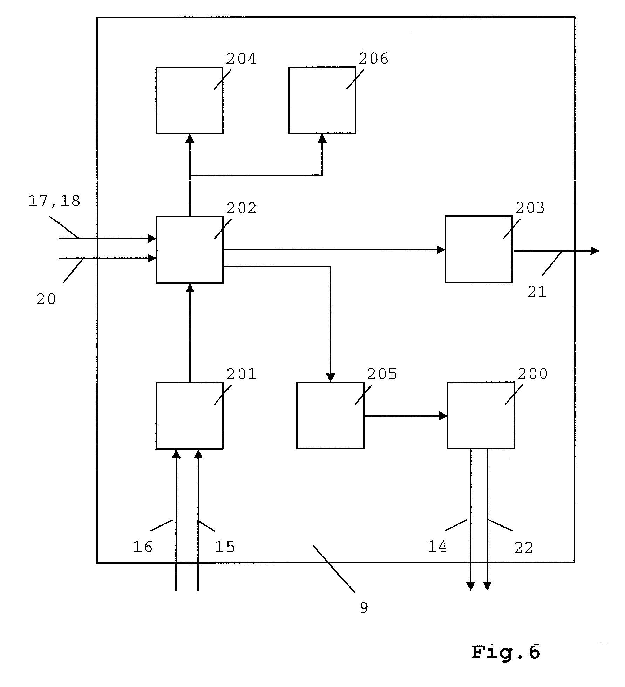

In Fig.6 a client is shown with additional functionality. In addition to the elements as shown in Fig.5, the client as shown in Fig.6 has an analysor 205 for deriving digital watermarks from the encrypted segments. The digital watermarks are transmitted to server system 1 through transmitter 200 as indicated by arrow 22. This provides server system 1 - next to the use of identifiers - with an additional traceability mechanism to detect fraudulent distribution of segments in the peer-to-peer network.

The client of Fig.6 has an advertisement module 206 for displaying advertisement data. When an encrypted segment is marked with advertisement data, the advertisement data is displayed on the client through the advertisement module 206.

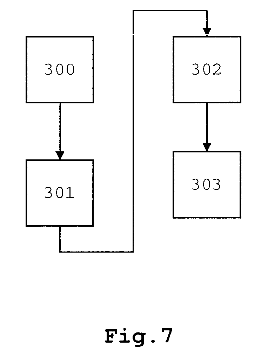

In Fig.7 a schematic view of a method of an exemplary embodiment of the invention is shown. The method is used in server system 1. In step 300 a file is split into segments. In step 301 each segment is encrypted with an encryption key, preferably a unique encryption key. In step 302 a content request is received from first client 7 and/or second client 8. In step 303 encrypted segments are transmitted to first client 7 and/or second client 8. The steps are not necessarily performed in the given order. It is e.g. possible that first a content request 302 is received and then the step 300 of splitting the file into segments is performed. It is possible that the step 302 of receiving the content request is performed in parallel to splitting 300 and encrypting 301.

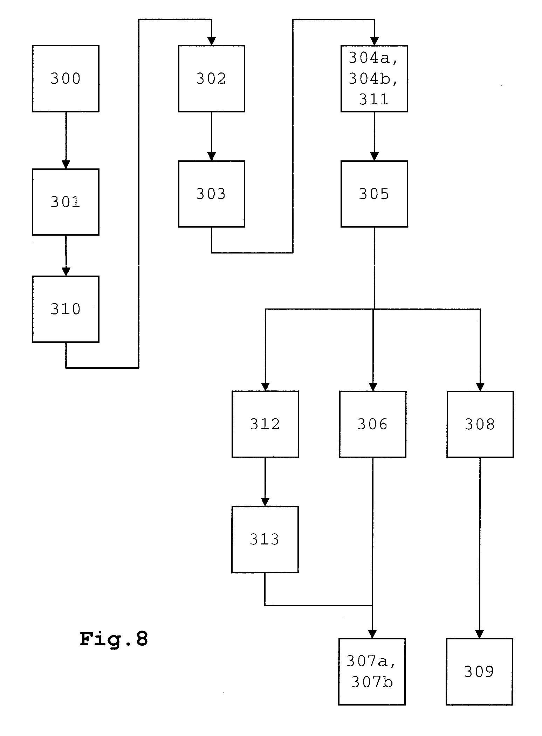

In Fig.8 a method is shown enabling additional functionality to the server system 1. It will be understood that the order of steps can be different from shown in Fig.8 and that Fig.8 is an exemplary embodiment of the invention. In addition to the steps as shown in Fig.7, the method as shown in Fig.8 marks encrypted segments in step 310 and stores 311 in first memory 104 the marks and association data for associating the marks with identifiers and with the receiving client. In step 304a,304b the identifiers are stored in memory 104. A content request is received in step 305 and a subset of identifiers identifying the requested file is selected from memory 104 in step 306. In step 307a,307b the identifiers are transmitted to the third client 9 for downloading the encrypted segments identified by the identifiers.

In case encrypted segments are marked with advertisement data, in step 312 the advertisement profile is read from second memory 108 and the identifiers are selected in step 313 depending on the content of the advertisement profile.

Decryption keys for decrypting encrypted segments in the client are generated in step 308 and transmitted to the client in step 309.

It is possible that the method according to the invention is partially or as a whole implemented as a program element. Hereto the server system 1 has a processor for executing the program element. Server system 1 is then e.g. a server on which software implementing the invention is loaded.

## Claims

1. A server system (1) for distributing content comprising at least one file and configured for connecting with at least a first client (7) and a second client (8), the server system (1) comprising:
- a file splitter (100) configured for splitting said file in at least a first segment and a second segment;
- an encryptor (101) configured for encrypting at least said first segment with a first encryption key or a second encryption key;
- a receiver (103) configured for receiving a content request from said first client (7) and said second client (8); and
- a transmitter (103) configured for transmitting said first segment encrypted with said first encryption key to said first client (7) and said first segment encrypted with said second encryption key to said second client (8) in response to said content request.

2. The server system (1) according to claim 1, wherein said server system (1) comprises a first memory (104) for storing a first identifier of said first segment encrypted with said first encryption key and a second identifier of said first segment encrypted with said second encryption key and said receiver (102) is further configured for receiving a content request from a third client (9), wherein said server system further comprises a selector (105) configured for selecting from said first memory (104) either said first identifier or said second identifier in response to receiving said content request from said third client (9) and said transmitter (103) is configured for transmitting said first identifier or said second identifier to said third client (9) for downloading said first segment.

3. The server system (1) according to claim 2, wherein said first memory (104) comprises a plurality of identifiers, each identifier uniquely identifying a segment of said file encrypted with an encryption key and wherein a subset of said plurality of identifiers identifies said file and wherein said transmitter (103) is configured for transmitting said subset of said plurality of said identifiers to said third client (9) in response to receiving said content request for downloading said file.

4. The server system (1) according to claim 3, wherein said subset of said plurality of identifiers is a unique subset.

5. The server system (1) according to claim 3 or 4, further comprising a key generator (106) configured for generating decryption keys for decrypting said segments of said subset and said transmitter (103) is configured for transmitting said decryption keys to said third client.

6. The server system (1) according to any of the claims 2-5, further comprising a marking module (107) configured for marking said first segment encrypted with said first encryption key with a first mark and said second segment encrypted with said second encryption key with a second mark, wherein said marking module (107) is configured for storing in said first memory (104) said first mark, a first association data for associating said first mark with said first identifier and said first client, said second mark, and a second association data for associating said second mark with said second identifier and said second client.

7. The server system (1) according to claim 6, wherein said first mark is a first unique digital watermark and said second mark is a second unique digital watermark.

8. The server system (1) according to claim 6, wherein said first mark is a first advertisement data and said second mark is a second advertisement data, wherein said server system
(1) further comprises a second memory (108) for storing an advertisement profile, and wherein said selector (105) is configured for reading from the second memory (108) said advertisement profile and for selecting from said first memory (104) either said first identifier or said second identifier depending on the content of the advertisement profile.

9. The server system (1) according to any of the claims 5-8, further comprising a subscription module configured for exchanging subscription data with the third client (9) and for verifying the subscription data prior to transmitting said decryption keys to said third client (9).

10. The server system (1) according to any of the claims 5-9, wherein each segment comprises a content part and a key part comprising a content key for decrypting said content part, wherein the encryptor (101) is configured for encrypting the content part of the segment with said content key and wherein the encryptor (101) is further configured for encrypting the key part of the segment with an enablement key, and wherein said key generator (106) is configured for generating decryption keys for decrypting the enablement key.

11. A client device (9) for receiving distributed content and configured for connecting with a server system (1) and at least one further client (7,8), the distributed content comprising at least one file split into two or more segments, each segment being encrypted with a encryption key, the client (9) comprising:
- a transmitter (200) configured for transmitting a content request to said server system (1);
- a receiver (201) configured for receiving from said server system (1) a subset of identifiers, each identifier uniquely identifying an encrypted segment and said subset of identifiers identifying said file, the receiver (201) further configured for receiving from said server system (1) decryption keys for decrypting the encrypted segments;
- a download module (202) configured for receiving one or more encrypted segments from the server system (1) or from the at least one further client (7,8);
- an upload module (203) configured for transmitting one or more encrypted segments received by the download module (202) to one or more of the at least one further client (7,8); and
- a decryptor (204) configured for decrypting the encrypted segments with said decryption keys.

12. The client (9) according to claim 11, wherein each encrypted segments is marked with a unique digital watermark, wherein the client (9) further comprises an analyser (205) configured for deriving the digital watermark from each encrypted segment, and wherein the transmitter (200) is configured for transmitting said digital watermark to the server system (1) for validating said encrypted segment.

13. The client (9) according to claim 11, wherein each encrypted segment is marked with an advertisement data, and wherein the client (9) further comprises an advertisement module (206) configured for displaying the advertisement data.

14. The client (9) according to any of the claims 11-13, further comprising a subscription module configured for exchanging subscription data with said server system (1) for verifying the subscription data in the server system (1) prior to receiving said decryption keys.

15. The client (9) according to any of the claims 11-14, wherein each segment comprises a content part and a key part comprising a content key for decrypting said content part, wherein said decryptor (204) is configured for decrypting the content key with the decryption key received from said server system (1) and wherein said decryptor (204) is further configured for decrypting the content part of the segment with said content key.

16. A computer-implemented method for distributing content comprising at least one file, the method for use in a server system (1) configured for connecting with at least a first client (7) and a second client (8), the method comprising the steps of:
- splitting (300) said file in at least a first segment and a second segment;
- encrypting (301) at least said first segment with a first encryption key or a second encryption key;
- receiving (302) a content request from said first client (7) and said second client (8); and
- transmitting (303) said first segment encrypted with said first encryption key to said first client (7) and said first segment encrypted with said second encryption key to said second client (8) in response to said content request.

17. The method according to claim 16, further comprising the steps of:
- storing (304a) in a first memory (104) a first identifier of said first segment encrypted with said first encryption key and a second identifier of said first segment encrypted with said second encryption key;
- receiving (305) a content request from a third client (9);
- selecting (306) from said first memory (104) either said first identifier or said second identifier in response to receiving said content request from said third client (9); and
- transmitting (307a) said first identifier or said second identifier to said third client (9) for downloading said first segment.

18. The method according to claim 17, comprising the step of storing (304b) in said first memory (104) a plurality of identifiers, each identifier uniquely identifying a segment of said file encrypted with an encryption key and wherein a subset of said plurality of identifiers identifies said file, and wherein the method further comprises the step of transmitting (307b) said subset of said plurality of said identifiers to said third client (9) in response to receiving (305) said content request for downloading said file.

19. The method according to claim 18, wherein said subset of said plurality of identifiers is a unique subset.

20. The method according to claim 18 or 19, further comprising the steps of generating (308) decryption keys for decrypting said segments of said subset and transmitting (309) said decryption keys to said third client (9).

21. The method according to any of the claims 17-20, further comprising the steps of:
- marking (310) said first segment encrypted with said first encryption key with a first mark and said second segment encrypted with said second encryption key with a second mark; and
- storing (311) in said first memory (104) said first mark, a first association data for associating said first mark with said first identifier and said first client, said second mark, and a second association data for associating said second mark with said second identifier and said second client.

22. The method according to claim 21, wherein said first mark is a first unique digital watermark and said second mark is a second unique digital watermark.

23. The method according to claim 21, wherein said first mark is a first advertisement data and said second mark is a second advertisement data, and wherein the method further comprises the steps of reading (312) from a second memory (108) an advertisement profile and selecting (313) from said first memory (104) either said first identifier or said second identifier depending on the content of the advertisement profile.

24. The method according to any of the claims 20-23, further comprising the steps of exchanging subscription data with the third client (9) and verifying the subscription data prior to transmitting said decryption keys to said third client (9).

25. The method according to any of the claims 20-24, wherein each segment comprises a content part and a key part comprising a content decryption key for decrypting said content part, wherein the method comprises the steps of encrypting the content part of the segment, and wherein the method further comprises the steps of encrypting the key part of the segment and generating decryption keys for decrypting the key part of the segments.

26. A computer program element, which, when being executed by a processor, is adapted to carry out a method for distributing content according to any of the claims 16-25.
